# EUROPEAN PATENT APPLICATION

(11) **EP 1 879 159 A1**
(43) Date of publication of application: **16.01.2008**
(21) Application number: 06745816.6
(22) Date of filing: 28.04.2006
(51) Int. Cl.: G08G 1/01, G08G 1/13

(54) **TRAVELING STATE JUDGING DEVICE AND TRAVELING STATE JUDGING METHOD**

(30) Priority: 06.05.2005 JP 2005134954
(71) Applicant: Pioneer Design Corporation, Meguro-ku, Tokyo 153-8654 (JP)
(72) Inventor: ODAGAWA, Satoshi c/o PIONEER CORPORATION, Sougou, Saitama; 3502288 (JP)
(74) Representative: Viering, Jentschura & Partner
(86) International application number: PCT/JP2006/308935
(87) International publication number: WO 2006/120930

(57) **Abstract**

Traveling state of vehicle is judged according to the type of road, speed measurements of three times and the average values of speed measurements of six times, and presence/absence of map matching. When the road type changes, when non-map matching state changes to map matching state, or when the vehicle starts to travel after continuation of stop state for a predetermined period, the speed measurement is cleared and the traveling state is judged after speed measurements of six times are stored.

## Description

### Technical Field

The present invention relates to a driving condition judging apparatus for and a driving condition judging method of judging the driving condition of a mobile object, such as a vehicle which drives on a road, for example, whether the mobile object is smoothly driving or the mobile object is not smoothly driving because of a traffic jam.

### Background Art

Some of the car navigation apparatuses which are currently spread are provided with a function of displaying a vehicle's drive track by changing colors in accordance with a traffic situation, such as the presence or absence of a traffic jam.

Moreover, in ITS (Intelligent Transport Systems), there has been promoted technological development to understand the traffic situation by using a vehicle as a sensor for detecting the traffic situation. That is, according to this technology, it is possible to understand various traffic situations, such as the presence or absence of the traffic jam in various places, by collecting information about positions and driving speeds of many vehicles which are driving in the various places, so that it is possible to provide traffic information and perform traffic management or the like. The vehicle used as the sensor in this type of technology is referred to as a probe car.

In order to realize the technology for understanding the traffic situation by using the drive track display function of the car navigation apparatus and by using the vehicle as the probe car, there has been promoted a technology of judging a vehicle's driving condition on the basis of information about the driving speed of the vehicle or the like. The vehicle's driving condition indicates, for example, whether the vehicle is smoothly driving or the vehicle is not smoothly driving because of the traffic jam or the like.

### Disclosure of Invention

### Subject to be Solved by the Invention

Some of the car navigation apparatuses, which are currently spread, regularly measure the vehicle's driving speed, calculate the average value of the driving speeds, and judge the vehicle's driving condition on the basis of the average value.

This type of method, however, has such a technical problem that it is hard to correctly judge the vehicle's driving condition, for example, whether the vehicle is smoothly driving or the vehicle is not smoothly driving because of the traffic jam.

For example, there are some cases where a driver intentionally stops the vehicle, such as the case that the driver drives the vehicle into a parking space of a shop and the case that the driver enters a service area or a parking area on an expressway and stops the vehicle. On the other hand, there are some cases where the driver has to stop the vehicle, regardless of the driver's intention, because of the traffic jam. It is hardly possible to distinguish between the case that the vehicle is stopped because of the driver's intention and the case that the vehicle is stopped because of the traffic jam, only by judging the vehicle's driving condition simply based on the average value of the vehicle's driving speed. As a result, even if the vehicle is stopped because of the driver's intention, in some cases, it is incorrectly judged that the vehicle is not smoothly driving because of the traffic jam.

Moreover, if the vehicle gets off an expressway to a general road, generally, the vehicle's speed significantly changes from a high speed to a low speed. However, immediately after the vehicle gets off the expressway to the general road, the average value of the driving speed is significantly high, compared to the average value of the driving speed while the vehicle continues to drive on the general road. This is because measured values when the vehicle was driving on the expressway are left in the measured values that serve as a basis for the calculation of the average value when the vehicle was driving on the expressway. As a result, immediately after the vehicle gets off the expressway, there are some cases where it is incorrectly judged that the vehicle is smoothly driving on the general road even if the vehicle cannot smoothly drive because of the traffic jam on the general road.

Moreover, when the vehicle gets on the expressway from the general road, generally, the vehicle's speed significantly changes from a low speed to a high speed. However, immediately after the vehicle gets on the expressway from the general road, the average value of the driving speed is significantly low, compared to the average value of the driving speed while the vehicle continues to drive on the expressway. This is because measured values when the vehicle was driving on the general road are left in the measured values that serve as a basis for the calculation of the average value when the vehicle was driving on the general road. As a result, immediately after the vehicle gets on the expressway, there are some cases where it is incorrectly judged that the vehicle is not smoothly driving on the expressway even if the expressway is not jammed and the vehicle starts to drive smoothly.

In order to solve the above-exemplified problems, it is therefore an object of the present invention to provide a driving condition judging apparatus and a driving condition judging method which can judge the driving condition of a mobile object, such as a vehicle.

### Means for Solving the Object

The above object of the present invention can be achieved by a driving condition judging apparatus provided with: a position measuring device for measuring a position of a mobile object; a memory device for storing road data in which positions and types of roads are recorded; a road type recognizing device for recognizing the type of the road on which the mobile object is driving, on the basis of the position of the mobile object measured by the position measuring device and the road data stored in the memory device; a speed measuring device for measuring a speed of the mobile object and providing a speed measurement value which indicates the speed of the mobile object; a first comparing device for comparing each of the speed measurement values of the number of measurement times m (m is an integer of 1 or more), which are provided by the speed measuring device, with a first speed reference value; a second comparing device for comparing an average value of the speed measurement values of the number of measurement times n (n is an integer of 2 or more), which are provided by the speed measuring device, with a second speed reference value; and a driving condition judging device for judging a driving condition of the mobile object, on the basis of the road type recognized by the road type recognizing device, a comparison result by the first comparing device, and a comparison result by the second comparing device.

The above object of the present invention can be also achieved by a driving condition judging method provided with: a position measuring process of measuring a position of a mobile object; a road type recognizing process of recognizing a type of a road on which the mobile object is driving, on the basis of the position of the mobile object measured by the position measuring device and road data in which positions and types of roads are recorded; a speed measuring process of measuring a speed of the mobile object and providing a speed measurement value which indicates the speed of the mobile object; a first comparing process of comparing each of the speed measurement values of the number of measurement times m (m is an integer of 1 or more), which are provided in the speed measuring process, with a first speed reference value; a second comparing process of comparing an average value of the speed measurement values of the number of measurement times n (n is an integer of 2 or more), which are provided in the speed measuring process, with a second speed reference value; and a driving condition judging process of judging a driving condition of the mobile object, on the basis of the road type recognized in the road type recognizing process, a comparison result in the first comparing process, and a comparison result in the second comparing process.

The above object of the present invention can be also achieved by a computer program for making a computer function as the driving condition judging apparatus of the present invention (including its various aspects).

The above object of the present invention can be also achieved by a computer program product in a computer-readable medium for tangibly embodying a program of instructions executable by a computer, to make the computer function as the driving condition judging apparatus of the present invention (including its various aspects).

According to the computer program product of the present invention, the aforementioned driving condition judging apparatus of the present invention can be embodied relatively readily, by loading the computer program product from a recording medium for storing the computer program product, such as a ROM (Read Only Memory), a CD-ROM (Compact Disc - Read Only Memory), a DVD-ROM (DVD Read Only Memory), a hard disk or the like, into the computer, or by downloading the computer program product, which may be a carrier wave, into the computer via a communication device. More specifically, the computer program product may include computer readable codes to cause the computer (or may comprise computer readable instructions for causing the computer) to function as the aforementioned driving condition judging apparatus of the present invention.

These effects and other advantages of the present invention will become more apparent from the following embodiment.

### Brief Description of Drawings

[FIG. 1] FIG. 1 is a block diagram showing a car navigation apparatus which is an embodiment of the present invention.
[FIG. 2] FIG. 2 is a flowchart showing a driving condition judgment process of the car navigation apparatus in FIG. 1.
[FIG. 3] FIG. 3 is a flowchart showing a clear condition check process in the driving condition judgment process in FIG. 2.
[FIG. 4] FIG. 4 is an explanatory diagram showing conditions in the driving condition judgment in the driving condition judgment process in FIG. 2.
[FIG. 5] FIG. 5 is an explanatory diagram showing a drive track display process of the car navigation apparatus in FIG. 1.
[FIG. 6] FIG. 6 is an explanatory diagram showing a probe car equipped with the car navigation apparatus in FIG. 1 and an ITS information center.
[FIG. 7] FIG. 7 is a block diagram showing the car navigation apparatus in FIG. 1 and a car audio apparatus.

### Description of Reference Codes

- 1: car navigation apparatus
- 11: GPS reception device
- 12: velocity measurement device
- 13: gyrosensor
- 15A: hard disk
- 17: microcomputer
- 19: RAM

### Best Mode for Carrying Out the Invention

Hereinafter, the best mode for carrying out the present invention will be explained in each embodiment in order with reference to the drawings.

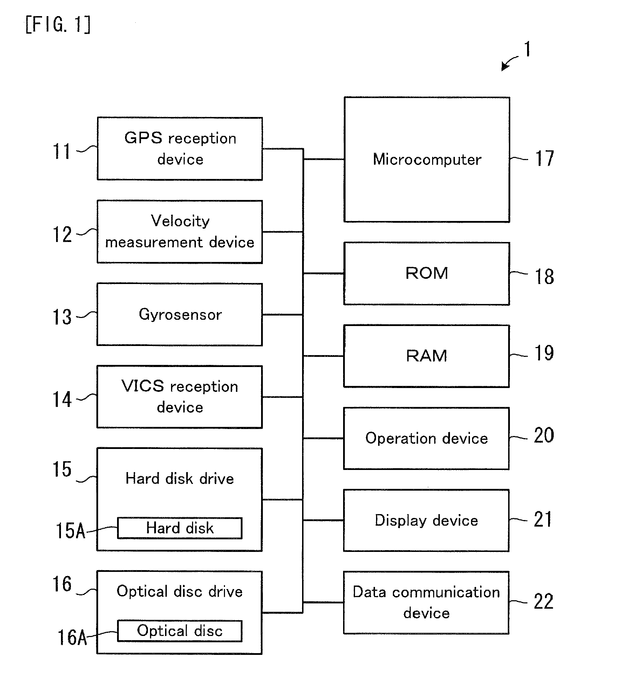

FIG. 1 shows a car navigation apparatus which is an embodiment of the driving condition judging apparatus of the present invention. A car navigation apparatus 1 in FIG. 1 is mounted on a vehicle, such as an automobile, and it can measure or obtain information about the vehicle's current position and traveling direction and display the information on a display screen to let a driver or the like know about it. Moreover, the car navigation apparatus 1 is provided with a function of displaying the drive track of the vehicle which is a positioning target (hereinafter referred to as a "own car") on a display screen. Moreover, the car navigation apparatus 1 is provided with a function of judging the driving condition of the own car and displaying the drive track by changing colors in accordance with the driving condition of the own car.

As shown in FIG. 1, the car navigation apparatus 1 is provided with: a GPS reception device 11; a velocity measurement device 12; a gyrosensor 13; a VICS reception device 14; a hard disk drive 15; an optical disc drive 16; a microcomputer 17; a ROM (Read Only Memory) 18; a RAM (Random Access Memory) 19; an operation device 20; a display device 21; and a data communication device 22.

The GPS reception device 11 receives electric waves transmitted from GPS satellites and measures the current position of the own car. Then, the GPS reception device 11 provides latitude information, longitude information, altitude information, which indicate the current position of the own car. The GPS reception device 11 is formed of a GPS receiver or the like.

The velocity measurement device 12 counts velocity pulses outputted from the own car and measure the driving speed of the own car. Then, the velocity measurement device 12 provides a speed measurement value which indicates the current driving speed of the own car. The velocity measurement device 12 is formed of a pulse counter or the like.

The gyrosensor 13 detects that the own car turns; namely, it detects that the own car changes its driving direction.

The VICS reception device 14 receives traffic-jam information provided from a VICS center. The VICS reception device 14 is formed of a VICS receiver or the like.

A hard disk 15A of the hard disk drive 15 has map data or the like recorded. The map data includes road data in which the positions and the types of roads are recorded.

The optical disc drive 16 is a multi disk drive apparatus which can reproduce data recorded on an optical disc 16A, such as a CD and a DVD. For example, the optical disc drive 16 can update the map data recorded on the hard disk 15A by transferring the newest or updated map data recorded on the optical disc 16A to the hard disk 15A. Incidentally, the map data recorded on the optical disc 16A may be used, as it is, for a navigation process or the like.

The microcomputer 17 executes a control program stored or recorded in the ROM 18, the hard disk 15A, or the optical disc 16A, to thereby control each of the constituent elements of the car navigation apparatus 1 to perform a measurement process of measuring the current position of the own car, a road type recognition process, a driving condition judgment process, a drive track display process, a navigation process, or the like. The microcomputer 17 is formed of an arithmetic processing circuit, a memory element, and the like.

The RAM 19 stores therein map matching information, road type information, speed measurement values, and the like, and it accumulates predetermined measurement times of those information.

The operation device 20 is provided with: a button for a user to input the information, commands, and the like to the car navigation apparatus 1; a mechanical switch, such as a knob; a touch panel apparatus; or the like.

The display device 21 is a display apparatus for displaying, to the user, the operation status of the car navigation apparatus 1, the map data, the current position of the own car, the drive track of the own car, the traffic-jam information, traffic regulation information, buttons for touch panel, and the like. The display device 21 is formed of, e.g., a liquid crystal display apparatus.

The data communication device 22 can connect the car navigation apparatus 1 to a mobile communication network and the Internet network via a data communication card, a mobile phone, or the like. The data communication device 22 can receive / transmit the information, e.g., from / to an ITS information center. Specifically, the data communication device 22 can transmit driving condition information generated on the car navigation apparatus 1, to the ITS information center. The data communication device 22 is formed of a communication interface circuit or the like.

The car navigation apparatus 1 measures the current position of the own car and generates position information which indicates the current position of the own car (i.e. the current position measurement process). Then, the car navigation apparatus 1 recognizes the type of a road on which the own car is currently driving, on the basis of the position information and the map data, and generates the road type information which indicates the road type (i.e. the road type recognition process). On the other hand, the car navigation apparatus 1 measures the driving speed of the own car and obtains the speed measurement value (i.e. the driving speed measurement process). Then, the car navigation apparatus 1 judges the current driving condition of the own car, on the basis of the road type information, the speed measurement value, or the like, and it generates the driving condition information which indicates the driving condition (i.e. the driving condition judgment process). Then, the car navigation apparatus 1 displays the drive track by using the driving condition information (i.e. the drive track display process). Hereinafter, each of these processes of the car navigation apparatus 1 will be explained.

Firstly, the current position measurement process for the own car is performed as follows by GPS measurement, autonomous navigation, map mapping, or the like. That is, the microcomputer 17 specifies the current position of the own car, on the basis of the latitude information, the longitude information, and the altitude information provided from the GPS reception device 11. Moreover, the microcomputer 17 corrects the current position of the own car, which is specified on the basis of the latitude information, the longitude information, and the altitude information, on the basis of the speed measurement value provided from the vehicle measurement device 12, the information about a change in the driving direction of the own car, which is detected by the gyrosensor 13, and the map data. Then, the microcomputer 17 generates the position information which indicates the current position of the own car.

Next, the road type recognition process is performed as follows. That is, the microcomputer 17 recognizes the type of the road on which the own car is driving, on the basis of the position information and the map data. That is, the map data includes the road data in which the positions and the types of roads are recorded. The microcomputer 17 firstly examines the road data and specifies a road which matches the current position of the own car indicated by the position information. Then, the microcomputer 17 examines the road data and recognizes the type of the specified road.

The road includes an intercity expressway, an urban expressway, a national route, a principal prefectural road, a prefectural highway, a general road, a street, and the like. The car navigation apparatus 1 classifies these roads into two types: i.e., an expressway and a general road. The intercity expressway and the urban expressway belong to the expressway. The national route, the principal prefectural road, the prefectural highway, the general road, and the street belong to the general road. The microcomputer 17 recognizes that the type of the specified road is the expressway if the type of the specified road is the intercity expressway or the urban expressway. On the other hand, the microcomputer 17 recognizes that the type of the specified road is the general road if the type of the specified road is the national route, the principal prefectural road, the prefectural highway, the general road, and the street. Then, the microcomputer 17 generates the road type information which indicates the type of the specified road.

Next, the driving speed measurement process is performed as follows. The microcomputer 17 receives the speed measurement value provided from the velocity measurement device 12. The speed measurement value indicates the current driving speed of the own car and is used for the driving condition judgment process or the like as it is.

The road type recognition process and the driving speed measurement process described above are repeated every 30 seconds, for example. That is, with or without a change in the road type, the road type information is generated every 30 seconds. Moreover, with or without a change in the driving speed, the speed measurement value is provided every 30 seconds from the velocity measurement device 12 through the microcomputer 17. Of course, if the type of the road on which the own car is driving is changed during the 30 seconds, the road type information is changed. Moreover, if the driving speed of the own car is changed during the 30 seconds, the speed measurement value is changed.

Moreover, the road type information and the speed measurement value obtained every 30 seconds are stored into the RAM 19, for example. With regard to the road type information, the road type information generated this time and the road type information generated last time are accumulated and held in the RAM 19. Moreover, with regard to the speed measurement value, the speed measurement value measured this time and the speed measurement values measured in the past five times before this time are accumulated and held in the RAM 19. The two times of road type information and the six times of speed measurement values accumulated in the RAM 19 are updated every 30 seconds.

Moreover, the microcomputer 17 generates the map matching information in the measurement process of measuring the current position of the own car. The map matching information indicates whether the current position of the own car exists on the road position indicated by the map data. If the current position of the own car exists on the road position indicated by the map data, the map matching position which indicates "map matching" is generated. On the other hand, if the current position of the own car does not exist on the road position indicated by the map data, the map matching position which indicates "not map matching" is generated. The map matching information is also generated every 30 seconds, and the map matching information generated this time and the map matching information generated last time are accumulated and held in the RAM 19. The two times of the map matching information stored in the RAM 19 are updated every 30 seconds.

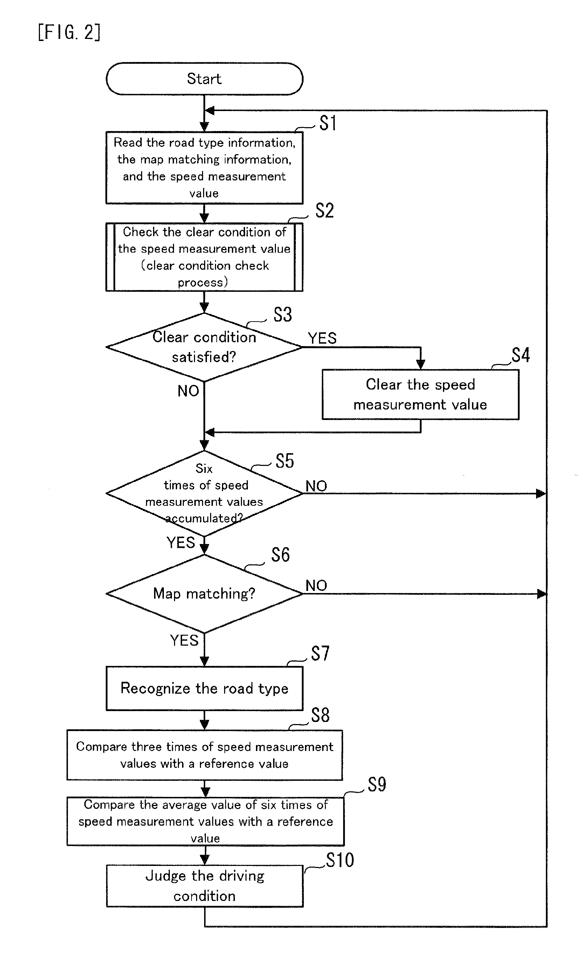

Next, the driving condition judgment process is as follows. The driving condition judgment process can be divided into two sections of a former half and a latter half. The former-half section is from a step S1 to a step S6 in FIG. 2, and this section is a pre-process of determining whether to perform the driving condition judgment process. Then, the latter-half section is from a step S7 to a step S10, and this section is a main process of the driving condition judgment process.

As shown in FIG. 2, in the driving condition judgment process, the microcomputer 17 firstly reads the road type information, the map matching information, and the speed measurement value from the RAM 19 (step S1). With regard to the road type information, the road type information generated this time and the road type information generated last time are read. With regard to the map matching information, the map matching information generated this time and the map matching information generated last time are read. With regard to the speed measurement value, the speed measurement value measured this time and the speed measurement values measured in the past five times before this time are read.

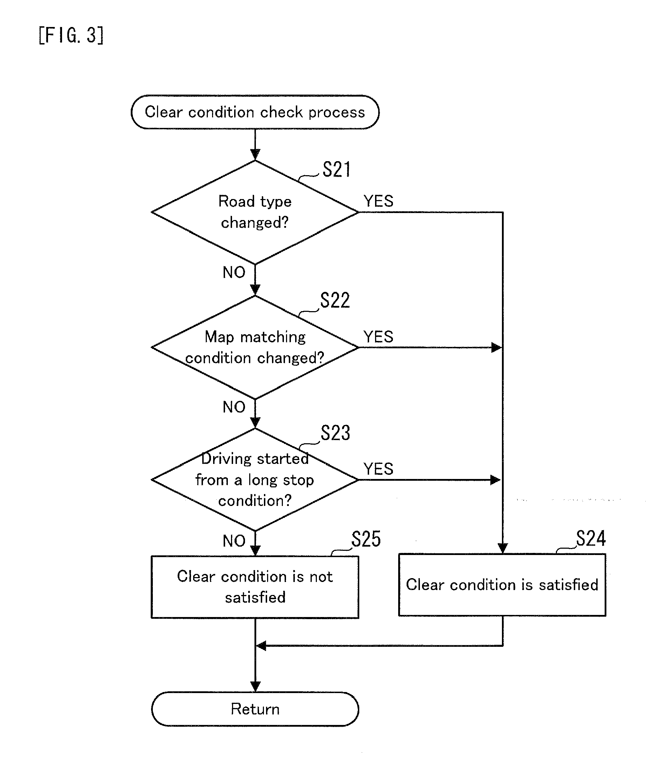

Then, the microcomputer 17 performs a clear condition check process to check the clear condition of the speed measurement value (step S2). The clear condition check process is as shown in FIG. 3. As shown in FIG. 3, the microcomputer 17 firstly judges whether or not the road type is changed (step S21). That is, the microcomputer 17 compares the road type information generated this time with the road type information generated last time, to thereby judge whether or not the road type is changed. For example, it is assumed that the own car gets off the expressway to the general road during 30 seconds. In this case, the road on which the own car was driving in the last time of generation of the road type information is the expressway, and the road on which the own car is driving in this time of generation of the road type information is the general road. Thus, the road type information is changed between last time and this time.

If the road type is changed (the step S21: YES), the microcomputer 17 judges that the clear condition of the speed measurement value is satisfied (step S24). For example, the microcomputer 17 sets a clear condition satisfaction flag to 1. Then, the process goes to the step S3 in FIG. 2.

On the other hand, if the road type is not changed (the step S21: NO), then, the microcomputer 17 judges whether or not the map matching condition is changed (step S22). That is, the microcomputer 17 compares the map matching information generated this time with the map matching information generated last time, to thereby judge whether or not the map matching information is changed. For example, it is assumed that the own car exits from a parking area and starts to drive on the expressway during 30 seconds. In this case, the own car was in the parking area, which is off the expressway, in the last time of generation of the map matching information. Thus, the previous map matching information indicates "not map matching". On the other hand, the own car starts to drive on the expressway in this time of generation of the map matching information. Thus, this time of map matching information indicates "map matching". Therefore, in this case, the map matching information is changed between this time and last time.

If the map matching information is changed (the step S22: YES), the microcomputer 17 judges that the clear condition of the speed measurement value is satisfied (the step S24). For example, the microcomputer 17 sets the clear condition satisfaction flag to 1. Then, the process goes to the step S3 in FIG. 2.

On the other hand, if the map matching information is not changed (the step S22: NO), then, the microcomputer 17 judges whether or not the own car starts to drive after continuing a predetermined period of stop condition (step S23). This judgment is performed as follows. That is, the microcomputer 17 examines the speed measurement values in the past five times. Then, if all the five times of speed measurement values indicate 0km, the microcomputer 17 judges that the own car has stopped for the predetermined period (e.g. at least 2 minutes 30 seconds). Then, the microcomputer 17 examines the speed measurement value measured this time. Then, if the speed measurement value measured this time is greater than 0km, the microcomputer 17 judges that the own car starts to drive after continuing the predetermined period of stop condition. For example, if the own car starts to drive after it has been stopped on the shoulder of the road for about 3 minutes, it is judged in the step S23 that the own car starts to drive after continuing the predetermined period of stop condition.

If the own car starts to drive after continuing the predetermined period of stop condition (the step S23: YES), the microcomputer 17 judges that the clear condition of the speed measurement value is satisfied (the step S24). For example, the microcomputer 17 sets the clear condition satisfaction flag to 1. Then, the process goes to the step S3 in FIG. 2.

On the other hand, if the own car does not start to drive after continuing the predetermined period of stop condition (the step S22: NO), then, the microcomputer 17 judges that the clear condition of the speed measurement value is not satisfied (the step S25). For example, the microcomputer 17 sets the clear condition satisfaction flag to 0. Then, the process goes to the step S3 in FIG. 2.

Then, the microcomputer 17 judges whether or not the clear condition is satisfied (step S3). For example, the microcomputer 17 examines the clear condition satisfaction flag and judges whether or not the clear condition is satisfied.

If the clear condition is satisfied, the microcomputer 17 clears the speed measurement value (step S4). That is, the microcomputer 17 deletes the six times in total of this time's and last time's speed measurement values stored in the RAM 19, in order to accumulate the speed measurement value again.

Then, the microcomputer 17 judges whether or not the six times of speed measurement values are accumulated (step S5). That is, the car navigation apparatus 1 performs the driving condition judgment process (main process) by using the average value of the six times in total of this time's and last time's speed measurement values. Thus, in order to highly correctly perform the driving condition judgment process, the six times of speed measurement values need to be accumulated in the RAM 19. The car navigation apparatus 1 does not perform the driving condition judgment process until the six times of speed measurement values are accumulated in the RAM 19. Thus, in the step S5, the microcomputer 17 judges whether or not the six times of speed measurement values are accumulated in the RAM 19, and if not (the step S5: NO), it returns the process to the step S1 without performing the subsequent process after the step S5.

If the six times of speed measurement values are accumulated (the step S5: YES), then the microcomputer 17 judges whether or not to be map matching (step S6). That is, the microcomputer 17 judges whether or not the current position of the own car is on the road; namely, whether or not the own car currently exists on the road. This judgment is performed by examining whether the map matching information generated this time indicates "map matching" or "not map matching". The car navigation apparatus 1 performs the driving condition judgment process (main process) described later only if the own car exists on the road. Thus, in the step S6, if the map matching information generated this time indicates "not map matching" and the own car does not currently exist on the road (the step S6: NO), the microcomputer 17 returns the process to the step S1 without performing the subsequent process after the step S6.

If the map matching information generated this time indicates "map matching" and the own car currently exists on the road (the step S6: YES), the microcomputer 17 starts the main process of the driving condition judgment process.

In the main process of the driving condition judgment process, the microcomputer 17 firstly recognizes the road type (step S7). That is, the microcomputer 17 examines the road type information generated this time, to thereby recognize whether the type of the road on which the own car is currently driving is the expressway or the general road.

Then, the microcomputer 17 compares three times of speed measurement values with a reference value (step S8). That is, the microcomputer 17 compares each of the speed measurement value measured this time, the speed measurement value measured last time, and the speed measurement value measured last but one time, with the reference value.

Then, the microcomputer 17 compares the average value of the six times of speed measurement values with a predetermined reference value (step S9). That is, the microcomputer 17 calculates the average value of the speed measurement value measured this time and the speed measurement values measured in the past five times before this time, and it compares the average value with the predetermined reference value.

Then, the microcomputer 17 judges the driving condition (step S10). That is, the microcomputer 17 judges the current driving condition of the own car, on the basis of the road type recognized in the step S7, each comparison result of the three times of speed measurement values with the reference value obtained in the step S8, and the comparison result of the six times of speed measurement values with the reference value obtained in the step S9.

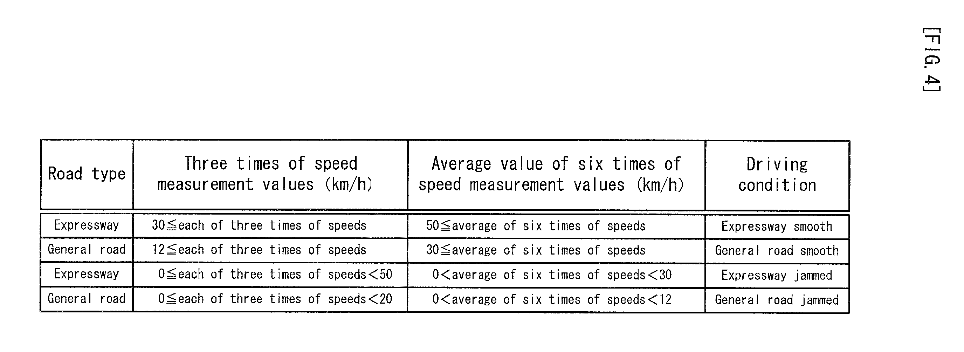

FIG. 4 shows conditions for performing the driving condition judgment in the step S10 (i.e. a reference value or reference range) on a table. If the type of the road on which the own car is currently driving is the expressway, if all the three times of speed measurement values are equal to or greater than 30km per hour, and if the average value of the six times of speed measurement values is equal to or greater than 50km per hour, the microcomputer 17 judges that the own car is currently smoothly driving on the expressway.

If the type of the road on which the own car is currently driving is the general road, if all the three times of speed measurement values are equal to or greater than 12km per hour, and if the average value of the six times of speed measurement values is equal to or greater than 30km per hour, the microcomputer 17 judges that the own car is currently smoothly driving on the general road.

If the type of the road on which the own car is currently driving is the expressway, if all the three times of speed measurement values are equal to or greater than 0km per hour and less than 50km per hour, and if the average value of the six times of speed measurement values is equal to or greater than 0km per hour and less than 30km per hour, the microcomputer 17 judges that the own car is currently not smoothly driving on the expressway.

If the type of the road on which the own car is currently driving is the general road, if all the three times of speed measurement values are equal to or greater than 0km per hour and less than 30km per hour, and if the average value of the six times of speed measurement values is equal to or greater than 0km per hour and less than 12km per hour, the microcomputer 17 judges that the own car is currently not smoothly driving on the general road.

Incidentally, if the combination of the three times of speed measurement values and the average value of the six times of speed measurement values does not apply to the conditions shown on the table in FIG. 4, the microcomputer 17 does not judge the driving condition.

The aforementioned driving condition judgment process from the step S1 to the step S10 is repeated every time the road type recognition process or the driving speed measurement process is performed, i.e. every 30 seconds.

Then, the microcomputer 17 generates the information which indicates the current driving condition of the own car, i.e. the driving condition information, by using the judgment result about the driving condition obtained by the driving condition judgment process, and it stores or records the information into the RAM 19 or the hard disk 15A. Normally, the driving condition information is generated every time the driving condition judgment process is performed, i.e. every 30 seconds, and it is accumulated and held in the RAM 19 or the hard disk 15A.

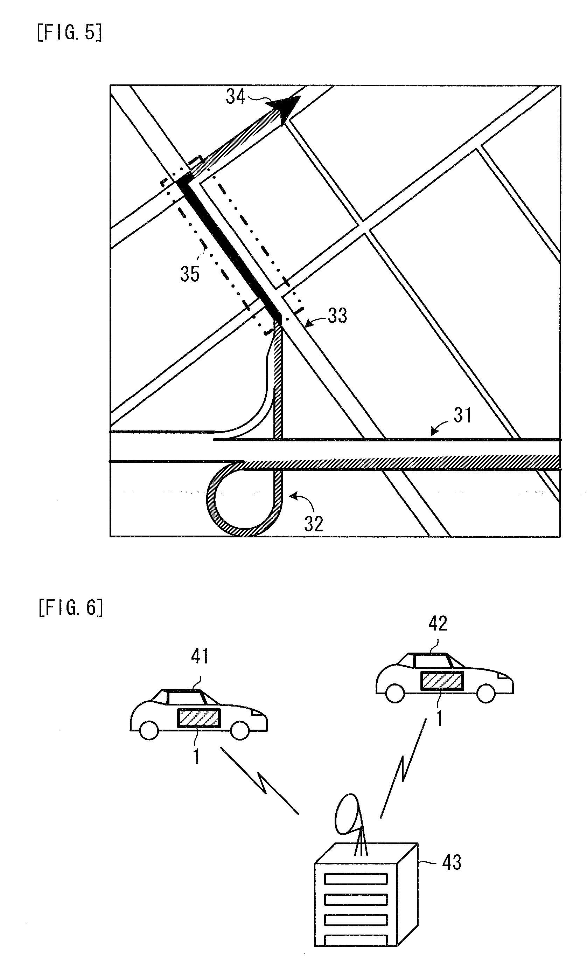

FIG. 5 shows an example of the display of the drive track, performed by using the judgment result about the driving condition obtained by the driving condition judgment process. The microcomputer 17 measures the position of the own car at predetermined intervals while the own car is driving, and it accumulates the position information which indicates the position of the own car into the RAM 19 or the hard disk 15A. Moreover, as described above, the microcomputer 17 accumulates the driving condition information, which is generated by using the judgment result of the driving condition judgment process, into the RAM 19 or the hard disk 15A. Moreover, the microcomputer 17 accumulates the position information and the driving condition information in association with each other, in order to associate the position of the own car with the driving condition at that position. In the drive track display process, the microcomputer 17 reads the position information accumulated in the RAM 19 or the hard disk 15A, cross-checks the position information with the map data, and draws the drive track on the map. Then, the microcomputer 17 reads the driving condition information accumulated in the RAM 19 or the hard disk 15A and colors the drive track on the basis of the driving condition information.

In the display example of FIG. 5, the own car gets off an expressway 31 at an interchange 32, enters a general road 33, turns right on the second crossing after entering the general road 33, and reaches to a current position 34. Moreover, in the display example of FIG. 5, a line which indicates such a drive track of the own car (an extended line) is drawn. Moreover, in the display example of FIG. 5, the color of the drive track in a traffic-jam portion 35 is different from that in the other portions. Incidentally, in the display example of FIG. 5, for convenience, the drive track in the traffic-jam portion 35 is blacked out, and the drive track in the other portions is marked with diagonal lines; however, practically, for example, the drive track in the traffic-jam portion 35 is colored in red and the drive track in the other portions is colored in yellow.

As explained above, according to the car navigation apparatus 1, the road type, the three times of speed measurement values, the average value of the six times of speed measurement values are used to perform the driving condition judgment, so that it is possible to correctly judge the driving condition of the own car.

Specifically, in the driving condition judgment process (main process), the microcomputer 17 does not judge that the own car is smoothly driving on the expressway if all the three times of speed measurement values are not greater than 30 km. By this, if the own car stops even once during the three times of speed measurement, it is not judged that the own car is smoothly driving on the expressway. Therefore, for example, if the own car stops at an expressway tollbooth or the like, it is not judged that the own car is smoothly driving on the expressway. As described above, according to the car navigation apparatus 1, it is possible to judge whether or not the own car is smoothly driving on the expressway.

Moreover, in the driving condition judgment process (main process), the microcomputer 17 does not judge that the own car is smoothly driving on the general road if all the three times of speed measurement values are not greater than 12 km. By this, if the own car stops even once during the three times of speed measurement, it is not judged that the own car is smoothly driving on the general road. Therefore, for example, if the own car stops at a red light or the like, it is not judged that the own car is smoothly driving on the general road. As described above, according to the car navigation apparatus 1, it is possible to judge whether or not the own car is smoothly driving on the general road.

Moreover, in the driving condition judgment process (main process), the microcomputer 17 sometimes judges that the own car is not smoothly driving on the expressway or the general road because of the traffic jam if any of the three times of speed measurement values is 0 km. In contrast, the microcomputer 17 does not judge that the own car is not smoothly driving on the expressway or the general road because of the traffic jam if the average value of the six times of speed measurement values is 0 km. By this, if the own car stops once, twice, or three times during the three times of speed measurement, it is sometimes judged that the own car is not smoothly driving on the expressway or the general road because of the traffic jam. However, if the own car continues to stop during the six times of speed measurement, it is not judged that the own car is not smoothly driving on the expressway or the general road because of the traffic jam. Therefore, it is possible to distinguish whether the own car has to be stopped sometimes because of the traffic jam or a driver intentionally stops the own car for three minutes or more, for example. That is, the vehicle does not continue to stop for three minutes or more even in the traffic jam, and if the vehicle continues to stop for three minutes or more, that is considered not because of the traffic jam but because the driver intentionally stops the vehicle. On the basis of this concept, it is distinguished whether the own car is stopped because of the traffic jam or because of the driver's intention. As described above, according to the car navigation apparatus 1, it is possible to correctly judge that the own car is not smoothly driving on the expressway or the general road because of the traffic jam.

Moreover, in the clear condition check process in the driving condition judgment process (pre-process), the microcomputer 17 clears the six times of speed measurement values (the step S21 in FIG. 3 and the step S4 in FIG. 2) if the road type information generated this time is changed from the road type information generated last time; namely, if the type of the road on which the own car is driving is changed. As a result, the driving condition judgment process is not performed until the six times of speed measurement values are newly accumulated after the speed measurement values are cleared (e.g. for about 3 minutes) (refer to the step S5). By this, it is possible to clearly separate the speed measurement values measured during the expressway driving and the speed measurement values measured during the general road driving. Thus, it is possible to prevent that the speed measurement values measured during the expressway driving are used for the driving condition judgment during the general road driving and that the speed measurement values measured during the general road driving are used for the driving condition judgment during the expressway driving. Therefore, it is possible to correctly judge the driving condition of the own car.

For example, it is assumed that the clear condition check process is not performed. If so, the driving condition judgment process (main process) is performed even when the own car gets off the expressway to the general road and thus the road type information is changed. In this case, in the six times of speed measurement values accumulated in the RAM 19, there are mixed the speed measurement values measured while the own car is driving on the expressway and the speed measurement values measured after the own car gets off the expressway to the general road. As a result, the average value of the six times of speed measurement values is significantly high, compared with the average value of the six times of speed measurement values measured while the own car continues to drive on the general road. Thus, immediately after the vehicle gets off the expressway to the general road, even if the general road is jammed and the own car cannot smoothly drive, it is sometimes incorrectly judged that the own car is smoothly driving on the general road. According to the car navigation apparatus 1, however, the six times of speed measurement values are cleared if the road type is changed, and the driving condition judgment is not performed for about 3 minutes after the clear, so that the incorrect judgment can be prevented.

Such an incorrect judgment prevention effect is produced even when the own car gets on the expressway from the general road. That is, it is assumed that the clear condition check process is not performed. If so, the driving condition judgment (main process) is performed even when the own car gets on the expressway from the general road and thus the road type information is changed. In this case, in the six times of speed measurement values accumulated in the RAM 19, there are mixed the speed measurement values measured while the own car is driving on the general road and the speed measurement values measured after the own car gets on the expressway. As a result, the average value of the six times of speed measurement values is significantly low, compared with the average value of the six times of speed measurement values measured while the own car continues to drive on the expressway. Thus, immediately after the vehicle gets on the expressway, even if the expressway is not jammed and the own car starts to drive smoothly, it is sometimes incorrectly judged that the own car is not smoothly driving on the expressway because of the traffic jam. According to the car navigation apparatus 1, however, the six times of speed measurement values are cleared if the road type is changed, and the driving condition judgment is not performed for about 3 minutes after the clear, so that the incorrect judgment can be prevented.

Moreover, in the clear condition check process in the driving condition judgment process (pre-process), the microcomputer 17 clears the six times of speed measurement values (the step S22 in FIG. 3 and the step S4 in FIG. 2) if the map matching information generated this time is changed from the map matching information generated last time. As a result, the driving condition judgment process is not performed until the six times of speed measurement values are newly accumulated after the speed measurement values are cleared (e.g. for about 3 minutes) (refer to the step S5). By this, it is possible to prevent the incorrect judgment about the driving condition when the own car moves to a road from a position away from the road. For example, it is assumed that the clear condition check process is not performed. If so, the driving condition judgment (main process) is performed even immediately after the own car exits from a parking area and gets on the expressway. In this case, in the six times of speed measurement values accumulated in the RAM 19, there are mixed the speed measurement values measured while the own car stops in the parking area or is driving at low speed and the speed measurement values measured after the own car gets on the expressway. As a result, the average value of the six times of speed measurement values is significantly low, compared with the average value of the six times of speed measurement values measured while the own car continues to drive on the expressway. Thus, immediately after the vehicle moves to the expressway from the parking area, even if the expressway is not jammed and the own car starts to drive smoothly, it is sometimes incorrectly judged that the own car is not smoothly driving on the expressway because of the traffic jam. According to the car navigation apparatus 1, however, it recognizes that the own car has moved into a road from a position away from the road, on the basis of a change in the map matching information, clears the six times of speed measurement values on the basis of the recognition, and does not perform the driving condition judgment for about 3 minutes after the clear. Thus, such an incorrect judgment can be prevented.

Moreover, in the clear condition check process in the driving condition judgment process (pre-process), the microcomputer 17 clears the six times of speed measurement values (the step S23in FIG. 3 and the step S4 in FIG. 2) if the own car starts to drive after continuing the predetermined period of stop condition. As a result, the driving condition judgment process is not performed until the six times of speed measurement values are newly accumulated after the speed measurement values are cleared (e.g. for about 3 minutes) (refer to the step S5). By this, it is possible to prevent the incorrect judgment about the driving condition when the own car starts to drive from the stop condition on the road. For example, it is assumed that the clear condition check process is not performed. If so, the driving condition judgment (main process) is performed even immediately after the own car starts to drive on the general road from the stop condition on the shoulder of the general road. In this case, in the six times of speed measurement values accumulated in the RAM 19, there are mixed the speed measurement values measured while the own car stops on the shoulder of the general road and the speed measurement values measured after the own car starts to drive on the general road. As a result, the average value of the six times of speed measurement values is significantly low, compared with the average value of the six times of speed measurement values measured while the own car continues to drive on the general road. Thus, immediately after the vehicle starts to drive from the stop condition on the shoulder, even if the general road is not jammed and the own car starts to drive smoothly, it is sometimes incorrectly judged that the own car is not smoothly driving on the general road because of the traffic jam. According to the car navigation apparatus 1, however, it recognizes that the own car has moved into a road from a position away from the road, on the basis of a change in the map matching information, clears the six times of speed measurement values on the basis of the recognition, and does not perform the driving condition judgment for about 3 minutes after the clear. Thus, such an incorrect judgment can be prevented.

Moreover, in the driving condition judgment process (pre-process), the microcomputer 17 clears does not perform the driving condition judgment process (the step S6 in FIG. 2) if the map matching information indicates "not map matching". By this, it is possible to distinguish whether the own car is away from the road or on the road. Therefore, it is possible to distinguish between the case that the own car stops or is driving at low speed in a position away from the road and the case that the own car stops or is driving at low speed on the road. By this, it is possible to distinguish between the case that the vehicle is stopped because of the traffic jam regardless of the driver's intention and the case that the driver intentionally stops the vehicle, such as the case that the driver drives the vehicle into a parking space of a shop and the case that the driver enters a service area or a parking area on the expressway and stops the vehicle. As described above, according to the car navigation apparatus 1, it can perform the driving condition judgment as long as the own car is on the road. Thus, it is possible to correctly judge that the own car is not smoothly driving on the expressway or the general road because of the traffic jam.

Incidentally, in the aforementioned explanation, the road type is classified into the expressway and the general road, wherein the intercity expressway and the urban expressway belong to the expressway, and the national route, the principal prefectural road, the prefectural highway, the general road, and the street belong to the general road. However, the way to classify the road type and the number of the road types (the number of classification items) are not limited to this. For example, the road type can be finely classified depending on a difference in the legal speed set for the road.

Moreover, the street may be removed from the road type. That is, the vehicle always drives at low speed on the street, and the vehicle often stops on the road for reasons unrelated to the traffic jam. Moreover, measuring the presence or absence of the traffic jam on the street is not so important for the traffic management in some cases. Therefore, the street may be removed from the road type and from the target of the driving condition judgment.

Moreover, in the aforementioned explanation, the following case is exemplified: the driving speed measurement process is performed every 30 seconds, and the three times of speed measurement values and the average value of the six times of speed measurement values are used for the driving speed measurement process. However, there is no limitation on the time interval to perform the driving speed measurement process, on the number of the speed measurement values used for the driving condition judgment process, and on the number of the speed measurement values used to calculate the average value of the speed measurement values. For example, the driving speed measurement process may be performed every 15 seconds, and six times of speed measurement values and the average value of 12 times of speed measurement values may be used for the driving condition judgment process.

Moreover, in the aforementioned explanation, the following case is exemplified: the driving condition information obtained by the driving condition judgment process is used to display the drive track. However, the application of the driving condition information is not limited to this. For example, as shown in FIG. 6, the driving condition information can be used as the traffic jam information in the ITS. That is, the car navigation apparatus 1 is mounted on each of prove cars 41 and 42. The driving condition judgment process is performed by each of the prove cars 41 and 42 to obtain the driving condition information, and this is transmitted by the data communication device 22 to an ITS information center 43. Then, the ITS information center 43 uses the driving condition information transmitted from each of the prove cars 41 and 42, as the traffic jam information, to thereby provide the traffic information and perform the traffic management or the like. According to the car navigation apparatus 1, as described above, it can perform the correct driving condition judgment and provide the correct driving condition information. Therefore, the car navigation apparatus 1 can contribute to accuracy or reliability in the traffic management or the traffic information in the ITS.

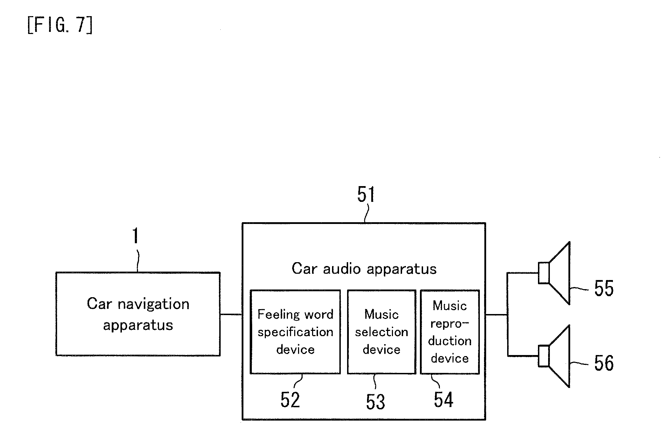

Moreover, as shown in FIG. 7, the traffic condition information obtained from the car navigation apparatus 1 can be also used for a car audio apparatus 51. That is, the car audio apparatus 51 is provided with: a feeling word specification device 52 for specifying a feeling word corresponding to the driving condition information provided from the car navigation apparatus 1; a music selection device 53 for selecting music on the basis of the feeling word specified by the feeling word specification device 52; and a reproduction device 54 for reproducing the music selected by the music selection device 53. That is, the feeling word is a word which expresses the feeling of a person in a certain environment, such as "cherry", "groovy", "calm," "sad", and "comforted". The feeling word specification device 52 specifies the feeling word corresponding to the driving condition information provided by the car navigation apparatus 1. For example, if the driving condition information indicates that the own car is smoothly driving on the expressway, the feeling word specification device 52 selects the feeling word of "groovy". Moreover, if the driving condition information indicates that the own car is smoothly driving on the general road, the feeling word specification device 52 selects the feeling word of "cheery". Moreover, if the driving condition information indicates that the own car is not smoothly driving on the expressway or the general road because of the traffic jam, the feeling word specification device 52 selects the feeling word of "comforted". Then, the music selection device 53 selects the music on the basis of the specified feeling word. For example, the music selection device 53 selects the music in a major key, with a quick tempo, and with an averagely large level, on the basis of the feeling word of "groovy". Moreover, the music selection device 53 selects the music on the basis of the specified feeling word. For example, the music selection device 53 selects the music in a minor key, with a quick tempo, and with an averagely large level, on the basis of the feeling word of "sad". The selection of the music based on the feeling word is performed as follows, for example. That is, a musical characteristic, such as the key of the music, the tempo, and the average value of the level, is extracted in advance, and the relation between the musical characteristic and the feeling word is determined in advance. Then, when the music is selected, the musical characteristic related to the specified feeling word is searched for, and the music having this musical characteristic is selected. Then, the music reproduction device 54 decodes and reproduces music data corresponding to the selected music. The reproduced music is outputted from speakers 55 and 56 mounted in the vehicle. Incidentally, the music data is recorded in a hard disk or the like mounted on the car audio apparatus 51 or the car navigation apparatus 1. According to the car navigation apparatus 1, as described above, it can perform the correct driving condition judgment and provide the correct driving condition information. Therefore, the feeling word can be correctly specified on the car audio apparatus 51, and the music which matches the feeling word can be correctly selected.

Moreover, in the aforementioned explanation, the following case is exemplified: the driving condition judging apparatus of the present invention is applied to the car navigation apparatus. The present invention, however, is not limited to this. For example, the driving condition judging apparatus of the present invention may be incorporated in the vehicle, such as an automobile, as an ECU (Electronic Control Unit). Moreover, the driving condition judging apparatus of the present invention may be mounted on the vehicle as on-vehicle audio equipment or measurement equipment.

Moreover, in the aforementioned car navigation apparatus 1, the GPS reception device 11, the velocity measurement device 12, the gyrosensor 13, and the microcomputer 17 are a specific example of the position measuring device. Moreover, the hard disk 15A is a specific example of the memory device. The velocity measurement device 12 is a specific example of the speed measuring device. The RAM 19 is a specific example of the accumulating device. Moreover, in the driving condition judgment process (refer to FIG. 2) performed by the microcomputer 17, the step S1 is a specific example of the position measuring device and the position measuring process. The step S7 is a specific example of the road type recognizing device and the road type recognizing process. The step S8 is a specific example of the first comparing device and the first comparing process. The step S9 is a specific example of the second comparing device and the second comparing process. The step S10 is a specific example of the driving condition judging device and the driving condition judging process. Moreover, in the clear condition check process (refer to FIG. 3) performed by the microcomputer 17, the step S21 is a specific example of the road type change judging device. The step S22 is a specific example of the mobile object position judging device. The step S23 is a specific example of the stop judging device.

Moreover, the present invention may be realized in such a form that it is unified with hardware as an exclusive apparatus, such as the car navigation apparatus; however, it may be realized by making a computer read a program to thereby make the computer function as the driving condition judging apparatus. In this case, a computer program is prepared to realize the road type recognizing device, the first comparing device, the second comparing device, and the driving condition judging device.

Moreover, in the present invention, various changes may be made without departing from the essence or spirit of the invention which can be read from the claims and the entire specification. A driving condition judging apparatus, a driving condition judging method, and a computer program which realizes these functions, which involve such changes, are also intended to be within the technical scope of the present invention.

### Industrial Applicability

The driving condition judging apparatus and the driving condition judging method according to the present invention can be applied to a car navigation apparatus of the like. Moreover, they can be applied to a driving condition judging apparatus or the like, which is mounted on or can be connected to various computer equipment for consumer use or business use, for example.

## Claims

1. A driving condition judging apparatus comprising:
a position measuring device for measuring a position of a mobile object;
a memory device for storing road data in which positions and types of roads are recorded;
a road type recognizing device for recognizing the type of the road on which the mobile object is driving, on the basis of the position of the mobile object measured by said position measuring device and the road data stored in said memory device;
a speed measuring device for measuring a speed of the mobile object and providing a speed measurement value which indicates the speed of the mobile object;
a first comparing device for comparing each of the speed measurement values of the number of measurement times m (m is an integer of 1 or more), which are provided by said speed measuring device, with a first speed reference value;
a second comparing device for comparing an average value of the speed measurement values of the number of measurement times n (n is an integer of 2 or more), which are provided by said speed measuring device, with a second speed reference value; and
a driving condition judging device for judging a driving condition of the mobile object, on the basis of the road type recognized by said road type recognizing device, a comparison result by said first comparing device, and a comparison result by said second comparing device.

2. The driving condition judging apparatus according to claim 1, wherein
said driving condition judging device judges that the mobile object is smoothly driving on a first road if the road type is the first road, if all the m times of speed measurement values is equal to or greater than a first speed lower limit A1, and if the average value of the n times of speed measurement values is equal to or greater than a second speed lower limit B1, and
said driving condition judging device judges that the mobile object is smoothly driving on a second road if the road type is the second road, if all the m times of speed measurement values is equal to or greater than a first speed lower limit A2 (A2<A1), and if the average value of the n times of speed measurement values is equal to or greater than a second speed lower limit B2 (B2<B1).

3. The driving condition judging apparatus according to claim 1, wherein
said driving condition judging device judges that the mobile object is not smoothly driving on a first road if the road type is the first road, if all the m times of speed measurement values is equal to or greater than a first speed lower limit A3 (A3=0) and is less than a first speed lower limit A4 (A4>A3), and if the average value of the n times of speed measurement values is equal to or greater than a second speed lower limit B3 (B3=0) and is less than a second speed lower limit B4 (B4>B3), and
said driving condition judging device judges that the mobile object is not smoothly driving on a second road if the road type is the second road, if all the m times of speed measurement values is equal to or greater than a first speed lower limit A5 (A5=0) and is less than a first speed lower limit A6 (A5<A6<A4), and if the average value of the n times of speed measurement values is equal to or greater than a second speed lower limit B5 (B5=0) and is less than a second speed lower limit B6 (B5<B6<B4).

4. The driving condition judging apparatus according to claim 1, wherein
the driving condition judging apparatus further comprises: a mobile object position judging device for judging whether or not the mobile object exists on a road, on the basis of the position of the mobile object measured by said position measuring device and the road data stored in said memory device, and
said driving condition judging device does not judge the driving condition of the mobile object if a judgment result of said mobile object position judging device shows that the mobile object does not exist on a road.

5. The driving condition judging apparatus according to claim 1, wherein the driving condition judging apparatus further comprises:
an accumulating device for accumulating the speed measurement value provided by said speed measuring device in order to obtain the average value of the n times of speed measurement values; and
a road type change judging device for judging whether or not the type of the road on which the mobile object is driving is changed, on the basis of the road type recognized by said road type recognizing device, and
said accumulating device accumulates again the speed measurement value if a judgment result of said road type change judging device shows that the type of the road on which the mobile object is driving is changed from a first road to a second road, or from the second road to the first road.

6. The driving condition judging apparatus according to claim 1, wherein the driving condition judging apparatus further comprises:
an accumulating device for accumulating the speed measurement value provided by said speed measuring device in order to obtain the average value of the n times of speed measurement values; and
a mobile object position judging device for judging whether or not the mobile object exists on a road, on the basis of the position of the mobile object measured by said position measuring device and the road data stored in said memory device,
said accumulating device accumulates again the speed measurement value if a judgment result of said mobile object position judging device shows that a situation is changed from that the mobile object does not exist on a road to that the mobile object exists on a road.

7. The driving condition judging apparatus according to claim 1, wherein the driving condition judging apparatus further comprises:
an accumulating device for accumulating the speed measurement value provided by said speed measuring device in order to obtain the average value of the n times of speed measurement values; and
a stop judging device for judging whether or not the mobile object has stopped for a predetermined period, on the basis of a measurement result of said measuring device,
said accumulating device accumulates again the speed measurement value if a judgment result of said stop judging device and a measurement result of said speed measuring device show that the mobile object starts to drive after the predetermined period of stop.

8. The driving condition judging apparatus according to claim 2, wherein the first road is an expressway and the second road is a road other than the expressway.

9. The driving condition judging apparatus according to claim 3, wherein the first road is an expressway and the second road is a road other than the expressway.

10. The driving condition judging apparatus according to claim 5, wherein the first road is an expressway and the second road is a road other than the expressway.

11. The driving condition judging apparatus according to claim 8, wherein the expressway includes an intercity expressway and an urban expressway.

12. The driving condition judging apparatus according to claim 9, wherein the expressway includes an intercity expressway and an urban expressway.

13. The driving condition judging apparatus according to claim 10, wherein the expressway includes an intercity expressway and an urban expressway.

14. A driving condition judging method comprising:
a position measuring process of measuring a position of a mobile object;
a road type recognizing process of recognizing a type of a road on which the mobile object is driving, on the basis of the position of the mobile object measured by said position measuring device and road data in which positions and types of roads are recorded;
a speed measuring process of measuring a speed of the mobile object and providing a speed measurement value which indicates the speed of the mobile object;
a first comparing process of comparing each of the speed measurement values of the number of measurement times m (m is an integer of 1 or more), which are provided in said speed measuring process, with a first speed reference value;
a second comparing process of comparing an average value of the speed measurement values of the number of measurement times n (n is an integer of 2 or more), which are provided in said speed measuring process, with a second speed reference value; and
a driving condition judging process of judging a driving condition of the mobile object, on the basis of the road type recognized in said road type recognizing process, a comparison result in said first comparing process, and a comparison result in said second comparing process.

15. A computer program for making a computer function as the driving condition judging apparatus according to claim 1.
